# FASCICULE DE BREVET EUROPEEN

(11) **EP 3 662 566 B1**
(45) Date de publication et mention de la délivrance du brevet: **20.04.2022**
(21) Numéro de dépôt: 18752581.1
(22) Date de dépôt: 10.07.2018
(51) Int. Cl.: H02K 9/06, H02K 7/10, F01D 15/10, F02C 7/26, F02C 7/268, F02C 7/275, H02K 11/33, H02K 7/14, F02C 7/12

(54) **TURBOMACHINE À MOTEUR DE DÉMARRAGE À VENTILATION RÉVERSIBLE, PROCÉDÉ DE REFROIDISSEMENT ASSOCIÉ**
TURBOMASCHINE MIT STARTERMOTOR MIT REVERSIBLER LÜFTUNG UND ZUGEHÖRIGES KÜHLVERFAHREN
TURBOMACHINE WITH STARTER MOTOR WITH REVERSIBLE VENTILATION, AND ASSOCIATED COOLING METHOD

(30) Priorité: 31.07.2017 FR 1757325
(43) Date de publication de la demande: 10.06.2020
(73) Titulaire: Safran Electrical & Power, 31702 Blagnac (FR)
(72) Inventeur: FONTALBAT, Thierry, CS 80049 31702 Blagnac Cedex (FR); CHALLAS, Florent, CS 80049 31702 Blagnac Cedex (FR); ORLANDINI, Fabien, CS 80049 31702 Blagnac Cedex (FR)
(74) Mandataire: Gevers & Orès
(86) Numéro de dépôt international: PCT/FR2018/051736
(87) Numéro de publication internationale: WO 2019/025684

(56) Documents cités:
- WO-A1-2013/007225
- FR-A1- 2 992 630

## Description

### 1. Domaine technique de l'invention

L'invention concerne une turbomachine. En particulier, l'invention concerne une turbomachine d'un hélicoptère, équipée d'un moteur électrique de démarrage et d'un système de refroidissement des composants électroniques dudit moteur électrique, et un procédé de refroidissement associé.

### 2. Arrière-plan technologique

L'état de l'art comporte notamment la demande de brevet français publiée sous le numéro FR-A1-2 992 630 et la demande internationale publie sous le numéro WO-A1-2013/007225.

Dans le cadre d'un fonctionnement dit hybride, des turbomachines équipant des hélicoptères peuvent être mise en veille pendant le vol, puis redémarrée si nécessaire. Le redémarrage de ces turbomachines est réalisé grâce à un moteur électrique de démarrage, qui entraine l'arbre d'entrainement de la turbomachine via une roue libre, pouvant se désenclencher à partir d'une certaine vitesse de rotation de la turbomachine. Les composants électroniques du moteur électrique sont refroidis par un système de refroidissement comprenant une roue de ventilation.

Lorsque l'hélicoptère se pose, les turbomachines sont arrêtées. Comme il n'y a plus de ventilation dynamique ou naturelle forcée (puisque l'hélicoptère est arrêté), la température de la turbomachine se diffuse vers le moteur électrique et ses composants électronique. En particulier, la température des composants électronique du moteur électrique situé à côté de la turbomachine augmente et peut entrainer des détériorations de ces composants. Le moteur électrique étant relié à la turbomachine, sa mise en rotation pour ventiler entrainerait une rotation de la turbomachine qui n'est pas souhaitée.

Les inventeurs ont donc cherché une solution pour réduire la température des composants électroniques du moteur électrique.

### 3. Objectifs de l'invention

L'invention vise à pallier au moins certains des inconvénients des turbomachines connues.

En particulier, l'invention vise à fournir, dans au moins un mode de réalisation de l'invention, une turbomachine permettant de réduire la chauffe des composants électronique du moteur électrique de démarrage de son système de démarrage lors de l'extinction de la turbomachine.

L'invention vise aussi à fournir, dans au moins un mode de réalisation de l'invention, une turbomachine utilisant une puissance réduite pour réduire la chauffe.

L'invention vise aussi à fournir, dans au moins un mode de réalisation, une turbomachine dont les composants électroniques du moteur électrique de démarrage peuvent être refroidis sans apport d'énergie électrique par la turbomachine éteinte.

L'invention vise aussi à fournir, dans au moins un mode de réalisation, un procédé de refroidissement des composants électroniques d'un moteur électrique d'une turbomachine.

### 4. Exposé de l'invention

Pour ce faire, l'invention concerne une turbomachine d'hélicoptère, comprenant :
- au moins un compresseur, au moins une turbine, et un arbre d'entrainement dudit compresseur et de la turbine,
- un moteur électrique de démarrage comprenant des composants électroniques et configuré pour entrainer en rotation ledit arbre d'entrainement,
- un système de refroidissement des composants électroniques du moteur électrique, comprenant un dissipateur thermique de refroidissement des composants électroniques et une roue de ventilation entrainée par le moteur électrique,
caractérisée en ce que :
- la roue de ventilation est une roue de ventilation réversible, adaptée pour générer un flux d'air dans un premier sens dit sens direct lorsqu'elle est en rotation dans un premier sens de rotation, et un flux d'air dans un sens opposé au sens direct, dit sens opposé, lorsqu'elle est en rotation dans un deuxième sens de rotation,
- la turbomachine comprend une roue libre, ladite roue libre étant configurée pour transmettre le couple généré par le moteur électrique à l'arbre d'entrainement lorsque le moteur électrique tourne selon un premier sens de rotation et à une vitesse au moins égale à la vitesse de l'arbre d'entrainement, lorsque la turbomachine fonctionne et entraine l'arbre d'entrainement,
- le moteur électrique est configuré pour, dans un premier mode de fonctionnement et dans le premier sens de rotation, entrainer d'une part l'arbre d'entrainement via la roue libre et d'autre part la roue de ventilation de sorte à générer un flux d'air à travers le dissipateur thermique dans le sens direct, et, dans un deuxième mode de fonctionnement et dans le sens inverse de rotation, entrainer uniquement la roue de ventilation de sorte à générer un flux d'air à travers le dissipateur thermique dans le sens opposé.

Une turbomachine selon l'invention permet donc, au moment de son extinction, une ventilation des composants électroniques du moteur électrique de démarrage en faisant tourner le moteur en sens inverse. Grâce à la roue libre, le moteur électrique fonctionnant en sens inverse n'entraine pas la turbomachine en rotation, mais uniquement la roue de ventilation.

La roue de ventilation est réversible et peut donc générer un flux d'air dans les deux sens par changement de son sens de rotation. Un exemple de roue de ventilation réversible peut être trouvé dans la demande de brevet du déposant publiée sous le numéro FR-A1-3 025 665.

Ainsi, avec une turbomachine selon l'invention, il est possible de continuer à refroidir le moteur électrique de démarrage et les composants électroniques du moteur électrique lorsque la turbomachine est arrêtée, en inversant le sens de rotation du moteur électrique. Ceci est possible du fait de la présence de la roue libre et de la roue de ventilation réversible.

Avantageusement et selon l'invention, dans le deuxième mode de fonctionnement, le moteur électrique est alimenté par une batterie dédiée.

Selon cet aspect de l'invention, la batterie permet d'alimenter le moteur électrique car il n'est plus alimenté ni par la turbomachine (celle-ci étant éteinte), ni par aucun équipement de l'hélicoptère car celui-ci est arrêté.

Avantageusement et selon l'invention, la vitesse de rotation de la roue de ventilation dans le deuxième mode de fonctionnement est configurée pour être inférieur à la vitesse de rotation de la roue de ventilation dans le premier mode de fonctionnement.

Selon cet aspect de l'invention, la vitesse de rotation est réduite de façon à permettre une ventilation efficace et limiter le phénomène de réchauffement des composants électroniques, mais en utilisant une puissance de fonctionnement très réduite, la puissance nécessaire à la rotation de la roue augmentant au cube de la vitesse de rotation de la roue de ventilation souhaitée.

Dans la variante de l'invention où l'alimentation est faite par une batterie, la batterie peut alors être de puissance et sa capacité peut être réduite.

Selon une variante préférentielle, la vitesse de rotation de la roue de ventilation dans le deuxième mode de fonctionnement est configurée pour être inférieur ou égale à la vitesse de rotation de la roue de ventilation dans le premier mode de fonctionnement. Cette variante permet un bon compromis entre ventilation et consommation électrique.

L'invention concerne également un procédé de ventilation des composants électroniques d'un moteur électrique de démarrage d'une turbomachine, ladite turbomachine comprenant :
- au moins un compresseur, au moins une turbine, et un arbre d'entrainement dudit compresseur et de la turbine,
- ledit moteur électrique de démarrage comprenant des composants électroniques et étant configuré pour entrainer en rotation ledit arbre d'entrainement via une roue libre,
- un système de refroidissement des composants électroniques du moteur électrique, comprenant un dissipateur thermique de refroidissement des composants électroniques et une roue de ventilation entrainée par le moteur électrique,
caractérisé en ce que, la roue de ventilation étant réversible, il comprend :
- une première étape d'entrainement par le moteur électrique d'une part de l'arbre d'entrainement via la roue libre et d'autre part de la roue de ventilation de sorte à générer un flux d'air à travers le dissipateur thermique dans un sens direct,
- une deuxième étape d'entrainement par le moteur électrique d'uniquement la roue de ventilation de sorte à générer un flux d'air à travers le dissipateur thermique dans un sens opposé au sens direct

Avantageusement et selon l'invention, la deuxième étape d'entrainement s'exécute après extinction de la turbomachine.

Avantageusement et selon l'invention, dans la deuxième étape d'entrainement, la roue de ventilation est entrainée dans un premier sens de rotation ou dans un sens de rotation opposé tant que la vitesse de rotation du moteur électrique est inférieure à la vitesse de rotation de la turbomachine, et uniquement dans le sens opposé de rotation si la vitesse de rotation du moteur électrique est supérieure ou égale à la vitesse de rotation de la turbomachine.

Ainsi, lorsque le moteur électrique n'entraine pas la turbomachine du fait de la présence de la roue libre, le moteur peut aussi entrainer la roue de ventilation dans l'un ou l'autre des sens de rotation. Lorsque la vitesse de rotation du moteur électrique est supérieure ou égale à la vitesse de rotation de la turbomachine, la roue libre entre en jeu et le ventilateur est donc uniquement entrainé en sens opposé.

Avantageusement, la turbomachine selon l'invention est adaptée pour mettre en œuvre le procédé selon l'invention.

Avantageusement, le procédé de l'invention est adapté pour être mis en œuvre dans une turbomachine selon l'invention.

L'invention concerne également une turbomachine et un procédé caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'une turbomachine selon un mode de réalisation de l'invention,
- la figure 2 est un graphique représentant la température de composants électroniques d'un moteur électrique de démarrage d'une turbomachine selon l'art antérieur puis selon un mode de réalisation de l'invention.

### 6. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations. Sur les figures, les échelles et les proportions ne sont pas strictement respectées et ce, à des fins d'illustration et de clarté.

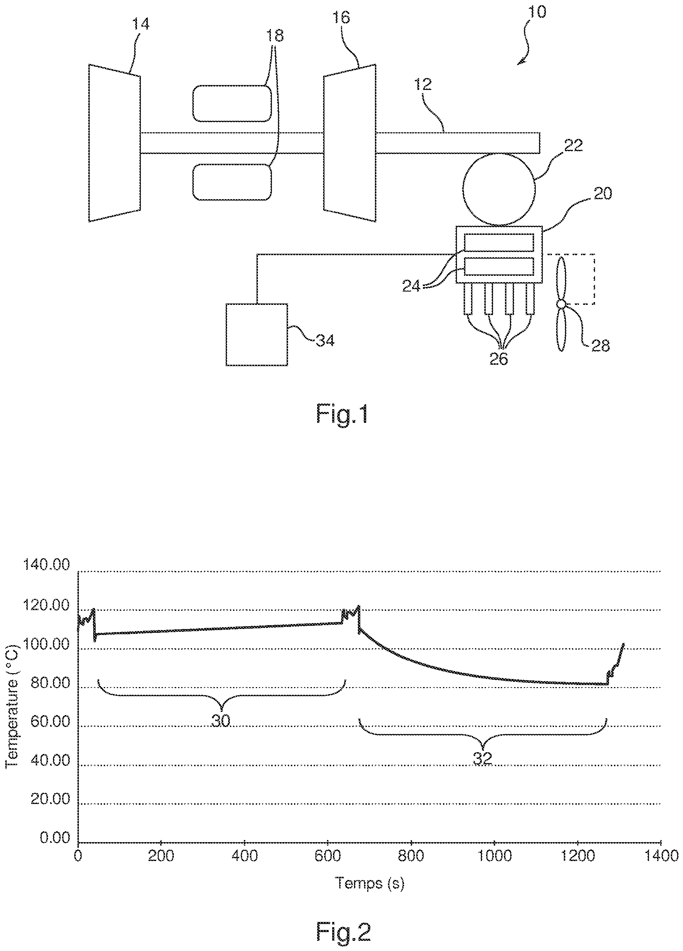

La figure 1 représente schématiquement une turbomachine 10, comprenant de façon connue un arbre 12 d'entrainement entrainant un compresseur 14 et une turbine 16 entre lesquels se trouve une chambre 18 de combustion, selon une représentation simplifiée d'une turbomachine.

Pour permettre un redémarrage rapide de la turbomachine, par exemple en vol dans un hélicoptère lorsqu'elle a été mise en veille, un moteur 20 électrique de démarrage est connecté à l'arbre 12 d'entrainement via une roue 22 libre (représentée ici schématiquement par un cercle).

La roue 22 libre à plusieurs fonctions : elle permet d'une part de s'assurer que le moteur électrique n'entraine l'arbre d'entrainement que quand le moteur électrique tourne selon un premier sens de rotation et de ne pas entrainer l'arbre d'entrainement lorsque le moteur électrique tourne selon un deuxième sens de rotation, et d'autre part de se désenclencher de l'arbre d'entraînement lorsque celui-ci tourne à une vitesse plus élevée que le moteur électrique.

Le moteur 20 électrique comprend des composants 24 électriques soumis à une chauffe d'une part de par leur fonctionnement, et d'autre part du fait de la proximité de la turbomachine génératrice de chaleur lors de son fonctionnement.

Un système de refroidissement des composants électroniques du moteur électrique comprend un dissipateur 26 thermique, ici composé de plusieurs ailettes à l'extérieur du moteur électrique, qui sont ventilées grâce à la génération d'un flux d'air dans un premier sens dit sens direct par une roue 28 de ventilation. La roue 28 de ventilation est directement entrainée par le moteur électrique.

La ventilation des composants 24 électriques et plus généralement de tous les éléments composant la turbomachine 10 est aussi réalisée en partie de façon naturelle lorsque la turbomachine équipe un hélicoptère et que l'hélicoptère est en vol et en mouvement grâce à l'air ambiant.

Selon l'invention, la roue 28 de ventilation est réversible, c'est-à-dire qu'elle est adaptée pour générer un flux d'air dans le sens direct lorsqu'elle est en rotation dans un premier sens de rotation, et un flux d'air dans un sens opposé au sens direct, dit sens opposé, lorsqu'elle est en rotation dans un deuxième sens de rotation.

Lorsque la turbomachine 10 est éteinte, elle n'est plus refroidie par l'avancement de l'hélicoptère et la chaleur qu'elle a emmagasinée suite à la combustion des gaz se propage aux composants 24 électroniques, cette chaleur s'ajoutant à la chaleur dégagée par ces mêmes composants 24 électroniques lors de leur fonctionnement et entraine une chauffe globale des composants 24 électroniques.

La figure 2 est un graphique représentant la température en fonction du temps d'un composant électronique en fonction du temps, notamment d'une diode, dans une première période 30 dans une turbomachine de l'art antérieur et selon un procédé de refroidissement de l'art antérieur, et dans une deuxième période 32 dans une turbomachine selon un mode de réalisation de l'invention et selon un procédé de refroidissement selon un mode de réalisation de l'invention. La même courbe est obtenue pour un transistor IGBT.

Dans l'art antérieur, comme le système de refroidissement n'est plus actif, la température des composants augmente pendant la première période 30 de temps, par exemple ici d'environ 107°C à environ 115°C.

Dans l'invention, notamment dans une turbomachine 10 selon le mode de réalisation décrit, après l'extinction de la turbomachine, le moteur électrique est entrainé en rotation selon le deuxième sens de rotation. Ainsi, la roue 28 de ventilation, qui est réversible, génère un flux d'air dans le sens opposé et réduit ainsi la température des composants électroniques, par exemple ici de 107°C à 82°C.

Ainsi, selon un procédé selon l'invention, la roue de ventilation ventile les composants lors d'une première étape lorsque la turbomachine est dans un premier mode de fonctionnement dans lequel elle est allumée, et grâce à son aspect réversible, ventile aussi les composants lors d'une deuxième étape lorsque la turbomachine est dans un deuxième mode de fonctionnement dans lequel elle est éteinte.

Pour limiter la consommation électrique et la puissance utilisée par la roue de ventilation, celle-ci peut être entrainé à une vitesse réduite lors de la deuxième étape. Par exemple, la roue de ventilation dans le premier mode de fonctionnement à une performance nominale :
- Vitesse de rotation : 30000 tours/minute,
- Flux d'air généré : 1301/s
- Puissance : 1kW

Dans le deuxième mode de fonctionnement, la performance peut être par exemple réduite d'un tiers, permettant une ventilation convenable avec une diminution conséquente de la puissance utilisée :
- Vitesse de rotation : 10000 tours/minute,
- Flux d'air généré : 43l/s
- Puissance : 40W

Cela est dû au fait que la puissance évolue au cube de la vitesse de rotation.

Pour alimenter le moteur électrique lors de ce deuxième mode de fonctionnement, la turbomachine peut comprendre une batterie 34 dédiée.

Le moteur électrique et son système de refroidissement sont ici représentés de façon schématisée pour plus de clarté. En pratique, un arrangement permet de disposer le moteur électrique et la roue de ventilation dans le même axe, le moteur électrique comprenant les dissipateurs thermiques sur son flanc et la roue de ventilation générant un flux d'air tout autour du moteur électrique au niveau des dissipateurs thermiques.

## Revendications

1. Turbomachine d'hélicoptère, comprenant :
- au moins un compresseur (14), au moins une turbine (16), et un arbre (12) d'entrainement dudit compresseur et de la turbine,
- un moteur (20) électrique de démarrage comprenant des composants (24) électroniques et configuré pour entrainer en rotation ledit arbre (12) d'entrainement,
- un système de refroidissement des composants (24) électroniques du moteur électrique, comprenant un dissipateur (26) thermique de refroidissement des composants électroniques et une roue (28) de ventilation entrainée par le moteur électrique,
**caractérisée en ce que** :
- la roue (28) de ventilation est une roue de ventilation réversible, adaptée pour générer un flux d'air dans un premier sens dit sens direct lorsqu'elle est en rotation dans un premier sens de rotation, et un flux d'air dans un sens opposé au sens direct, dit sens opposé, lorsqu'elle est en rotation dans un deuxième sens de rotation,
- la turbomachine comprend une roue (22) libre, ladite roue libre étant configurée pour transmettre le couple généré par le moteur (20) électrique à l'arbre (12) d'entrainement lorsque le moteur (20) électrique tourne selon un premier sens de rotation et à une vitesse au moins égale à la vitesse de l'arbre (12) d'entrainement, lorsque la turbomachine fonctionne et entraine l'arbre d'entrainement,
- le moteur (20) électrique est configuré pour, dans un premier mode de fonctionnement et dans le premier sens de rotation, entrainer d'une part l'arbre (12) d'entrainement via la roue (22) libre et d'autre part la roue (28) de ventilation de sorte à générer un flux d'air à travers le dissipateur (26) thermique dans le sens direct, et, dans un deuxième mode de fonctionnement et dans le sens inverse de rotation, entrainer uniquement la roue (28) de ventilation de sorte à générer un flux d'air à travers le dissipateur (26) thermique dans le sens opposé.

2. Turbomachine selon la revendication 1, **caractérisée en ce que** dans le deuxième mode de fonctionnement, le moteur (20) électrique est alimenté par une batterie (34) dédiée.

3. Turbomachine selon l'une des revendications 1 ou 2, **caractérisée en ce que** la vitesse de rotation de la roue (28) de ventilation dans le deuxième mode de fonctionnement est configurée pour être inférieur à la vitesse de rotation de la roue (28) de ventilation dans le premier mode de fonctionnement.

4. Procédé de ventilation des composants électroniques d'un moteur électrique de démarrage d'une turbomachine (10), ladite turbomachine comprenant :
- au moins un compresseur (14), au moins une turbine (16), et un arbre (12) d'entrainement dudit compresseur et de la turbine,
- ledit moteur (20) électrique de démarrage comprenant des composants (24) électroniques et étant configuré pour entrainer en rotation ledit arbre (12) d'entrainement via une roue (22) libre,
- un système de refroidissement des composants électroniques du moteur électrique, comprenant un dissipateur (26) thermique de refroidissement des composants électroniques et une roue (28) de ventilation entrainée par le moteur électrique,
**caractérisé en ce que**, la roue (28) de ventilation étant réversible, il comprend :
- une première étape d'entrainement par le moteur (20) électrique d'une part de l'arbre (12) d'entrainement via la roue (22) libre et d'autre part de la roue (28) de ventilation de sorte à générer un flux d'air à travers le dissipateur (26) thermique dans un sens direct,
- une deuxième étape d'entrainement par le moteur (20) électrique d'uniquement la roue (28) de ventilation de sorte à générer un flux d'air à travers le dissipateur (26) thermique dans un sens opposé au sens direct.

5. Procédé de ventilation selon la revendication 4, **caractérisé en ce que** la deuxième étape d'entrainement s'exécute après extinction de la turbomachine (10).

6. Procédé de ventilation selon la revendication 4, **caractérisé en ce que**, dans la deuxième étape d'entrainement, la roue de ventilation est entrainée dans un premier sens de rotation ou dans un sens de rotation opposé tant que la vitesse de rotation du moteur électrique est inférieure à la vitesse de rotation de la turbomachine, et uniquement dans le sens opposé de rotation si la vitesse de rotation du moteur électrique est supérieure ou égale à la vitesse de rotation de la turbomachine.

## Patentansprüche

1. Hubschrauberturbomaschine, umfassend:
- mindestens einen Kompressor (14), mindestens eine Turbine (16), und eine Welle (12) zum Antreiben des Kompressors und der Turbine,
- einen Elektromotor (20) zum Starten, der Elektronikbauteile (24) umfasst und dazu konfiguriert ist, die Antriebswelle (12) in Drehung zu versetzen,
- ein System zum Kühlen der Elektronikbauteile (24) des Elektromotors, umfassend einen Wärmeableiter (26) zum Kühlen der Elektronikbauteile und ein von dem Elektromotor angetriebenes Lüftungsrad (28),
**dadurch gekennzeichnet, dass**:
- das Lüftungsrad (28) ein reversibles Lüftungsrad ist, das dazu angepasst ist, einen Luftstrom in eine erste Richtung, als direkte Richtung bezeichnet, zu erzeugen, wenn es sich in eine erste Drehrichtung dreht, und einen Luftstrom in eine zur direkten Richtung entgegengesetzten Richtung, als entgegengesetzte Richtung bezeichnet, wenn es sich in eine zweite Drehrichtung dreht,
- die Turbomaschine ein freies Rad (22) umfasst, wobei das freie Rad dazu konfiguriert ist, das von dem Elektromotor (20) erzeugte Drehmoment auf die Antriebswelle (12) zu übertragen, wenn sich der Elektromotor (20) gemäß einer ersten Drehrichtung und bei einer Geschwindigkeit dreht, die mindestens gleich der Geschwindigkeit der Antriebswelle (12) ist, wenn die Turbomaschine in Betrieb ist und die Antriebswelle antreibt,
- der Elektromotor (20) dazu konfiguriert ist, in einem ersten Betriebsmodus und in der ersten Drehrichtung einerseits die Antriebswelle (12) über das freie Rad (22) und andererseits das Lüftungsrad (28) so anzutreiben, dass ein Luftstrom durch den Wärmeableiter (26) hindurch in der direkten Richtung erzeugt wird, und in einem zweiten Betriebsmodus und in der entgegengesetzten Drehrichtung nur das Lüftungsrad (28) so anzutreiben, dass ein Luftstrom durch den Wärmeableiter (26) hindurch in der entgegengesetzten Richtung erzeugt wird.

2. Turbomaschine nach Anspruch 1, **dadurch gekennzeichnet, dass** im zweiten Betriebsmodus der Elektromotor (20) über eine dezidierte Batterie (34) versorgt wird.

3. Turbomaschine nach einem der Ansprüche 1 oder 2, **dadurch gekennzeichnet, dass** die Drehzahl des Lüftungsrads (28) im zweiten Betriebsmodus dazu konfiguriert ist, kleiner als die Drehzahl des Lüftungsrads (28) im ersten Betriebsmodus zu sein.

4. Verfahren zum Lüften der Elektronikbauteile eines Elektromotors zum Starten einer Turbomaschine (10), wobei die Turbomaschine umfasst:
- mindestens einen Kompressor (14), mindestens eine Turbine (16), und eine Antriebswelle (12) des Kompressors und der Turbine,
- wobei der Elektromotor (20) zum Starten Elektronikbauteile (24) umfasst und dazu konfiguriert ist, die Antriebswelle (12) über ein freies Rad (22) in Drehung zu versetzen,
- ein System zum Kühlen der Elektronikbauteile des Elektromotors, umfassend einen Wärmeableiter (26) zum Kühlen der Elektronikbauteile und ein von dem Elektromotor angetriebenes Lüftungsrad (28),
**dadurch gekennzeichnet, dass** das Lüftungsrad (28) reversibel ist, umfassend:
- einen ersten Schritt des Antreibens, durch den Elektromotor (20), einerseits der Antriebswelle (12) über das freie Rad (22) und andererseits des Lüftungsrads (28), sodass ein Luftstrom durch den Wärmeableiter (26) hindurch in einer direkten Richtung erzeugt wird,
- einen zweiten Schritt des Antreibens, durch den Elektromotor (20), nur des Lüftungsrads (28), sodass ein Luftstrom durch den Wärmeableiter (26) hindurch in einer der direkten Richtung entgegengesetzten Richtung erzeugt wird.

5. Lüftungsverfahren nach Anspruch 4, **dadurch gekennzeichnet, dass** der zweite Schritt des Antreibens nach Abschalten der Turbomaschine (10) durchgeführt wird.

6. Lüftungsverfahren nach Anspruch 4, **dadurch gekennzeichnet, dass** im zweiten Schritt des Antreibens das Lüftungsrad in eine erste Drehrichtung oder in eine entgegengesetzte Drehrichtung angetrieben wird, solange die Drehzahl des Elektromotors kleiner als die Drehzahl der Turbomaschine ist, und nur in die entgegengesetzte Drehrichtung, falls die Drehzahl des Elektromotors größer oder gleich der Drehzahl der Turbomaschine ist.

## Claims

1. Helicopter turbine engine, comprising:
- at least one compressor (14), at least one turbine (16), and a drive shaft (12) of said compressor and of the turbine,
- an electric starter motor (20) comprising electronic components (24) and configured to rotate said drive shaft (12),
- a system for cooling electronic components (24) of the electric motor, comprising a heat sink (26) for cooling electronic components and a ventilation wheel (28) driven by the electric motor,
**characterised in that**:
- the ventilation wheel (28) is a reversible ventilation wheel, adapted to generate an air flow in a first direction termed direct direction when it is rotated in a first direction of rotation, and an air flow in a direction opposite the direct direction, termed opposite direction, when it is rotated in a second direction of rotation,
- the turbine engine comprises an overrunning clutch (22), said overrunning clutch being configured to transmit the torque generated by the electric motor (20) to the drive shaft (12) when the electric motor (20) rotates according to a first direction of rotation and at a speed at least equal to the speed of the drive shaft (12) when the turbine engine operates and drives the drive shaft,
- the electric motor (20) is configured to, in a first operating mode and in the first direction of rotation, drive, on the one hand, the drive shaft (12) via the overrunning clutch (22) and, on the other hand, the ventilation wheel (28) so as to generate an air flow through the heat sink (26) in the direct direction, in a second operating mode and in the reverse direction of rotation, drive only the ventilation wheel (28) so as to generate an air flow through the heat sink (26) in the opposite direction.

2. Turbine engine according to claim 1, **characterised in that** in the second operating mode, the electric motor (20) is supplied by a dedicated battery (34).

3. Turbine engine according to one of claims 1 or 2, **characterised in that** the rotation speed of the ventilation wheel (28) in the second operating mode is configured to be less than the rotation speed of the ventilation wheel (28) in the first operating mode.

4. Method for ventilating electronic components of an electric starter motor of a turbine engine (10), said turbine engine comprising:
- at least one compressor (14), at least one turbine (16), and a drive shaft (12) of said compressor and of the turbine,
- said electric starter motor (20) comprising electronic components (24) and being configured to rotate said drive shaft (12) via an overrunning clutch (22),
- a system for cooling electronic components of the electric motor, comprising a heat sink (26) for cooling electronic components and a ventilation wheel (28) driven by the electric motor,
**characterised in that**, with the ventilation wheel (28) being reversible, it comprises:
- a first step of driving by the electric motor (20), on the one hand, the drive shaft (12) via the overrunning clutch (22) and, on the other hand, the ventilation wheel (28) so as to generate an air flow through the heat sink (26) in a direct direction,
- a second step of driving by the electric motor (20) only the ventilation wheel (28) so as to generate an air flow through the heat sink (26) in a direction opposite the direct direction.

5. Ventilation method according to claim 4, **characterised in that** the second driving step is executed after shutdown of the turbine engine (10).

6. Ventilation method according to claim 4, **characterised in that**, in the second driving step, the ventilation wheel is driven in a first direction of rotation or in an opposite direction of rotation, while the rotation speed of the electric motor is less than the rotation speed of the turbine engine, and only in the opposite direction of rotation if the rotation speed of the electric motor is greater than or equal to the rotation speed of the turbine engine.
